# EUROPEAN PATENT APPLICATION

(11) **EP 1 480 351 A1**
(43) Date of publication of application: **24.11.2004**
(21) Application number: 03705302.2
(22) Date of filing: 19.02.2003
(51) Int. Cl.: H04B 7/06, H04L 1/02

(54) **RECEIVING APPARATUS AND RECEIVING METHOD**

(30) Priority: 25.02.2002 JP 2002047545
(71) Applicant: MATSUSHITA ELECTRIC INDUSTRIAL CO., LTD., Kadoma-shi, Osaka 571-8501 (JP)
(72) Inventor: EBIKO, Keisuke, Yokosuka-shi, Kanagawa 239-0807 (JP); YOSHII, Isamu, Yokosuka-shi, Kanagawa 239-0847 (JP)
(74) Representative: Grünecker, Kinkeldey, Stockmair & Schwanhäusser Anwaltssozietät
(86) International application number: PCT/JP2003/001753
(87) International publication number: WO 2003/071712

(57) **Abstract**

A receiving apparatus and receiving method that obtain good decoding characteristics in a multipath environment or multi-user environment. A radio receiving section (110) performs predetermined radio processing on a reception signal received via an antenna (100). A channel estimation section (120) performs channel estimation for the propagation path of the received signal. An equalizer (130) generates a replica of the received signal and performs equalization, and eliminates a delayed wave component from the received signal. A channel de-interleaver (140) de-interleaves the direct wave component of the received signal. A space-time turbo decoder (150) performs space-time turbo decoding of the received signal. A data decision section (160) makes a hard decision on a soft output likelihood from the space-time turbo decoder (150), and obtains a space-time turbo decoding result. A channel interleaver (170) interleaves the space-time turbo decoding result, and outputs the result to the equalizer (130).

## Description

### Technical Field

The present invention relates to a receiving apparatus and receiving method.

### Background Art

Heretofore, STC (Space-Time Coding) disclosed in United States Patent No. 6,115,427 has been known as a method whereby different coded symbols are transmitted from a plurality of transmitting antennas. STC is a technology that combines coding and transmission diversity, and achieves higher transmission speed per unit frequency and unit time by performing radio transmission of mutually differing coded symbols from a plurality of transmitting antennas simultaneously and using the same frequency.

A receiving apparatus that receives a signal transmitted using STC performs channel estimation of the corresponding propagation path for each transmitting antenna/receiving antenna pair using pilot symbols contained in the received signal, and based on the estimated channel characteristics, decodes the received signal in which information bits and parity bits are superimposed, and extracts the information bits.

However, with a conventional STC receiving apparatus there is a problem in that, when decoding is performed in a multipath environment or multi-user environment such as are found in radio mobile communications, it is necessary to take account even of delayed wave components and other user components contained in the received signal when performing decoding, with the result that decoding performance degrades.

Also, although a diversity effect is obtained because coded symbols transmitted from a plurality of transmitting antennas are each subject to different fading, there is a problem of degradation of decoding performance when proximity or overlapping of reception signal point candidates occurs due to instantaneous fading correlation. When the number of superimposed signals increases due to multipath propagation, in particular, there is an increased possibility of the occurrence of proximity or overlapping of reception signal point candidates.

### Disclosure of Invention

It is an object of the present invention to obtain good decoding characteristics in a multipath environment or multi-user environment.

The gist of the present invention is that good decoding characteristics can be achieved with STC (Space-Time Coding) combining coding and transmission diversity, by repeating processing in which equalization is performed that eliminates a delayed wave component of a received signal using the results of error correction decoding, and error correction decoding is performed on the direct wave component obtained by equalization.

According to one embodiment of the present invention, a receiving apparatus comprises an acquisition section that acquires a direct wave component from a received signal subjected to space-time error correction coding, and a decoding section that performs space-time error correction decoding of the acquired direct wave component; wherein the acquisition section acquires a direct wave component of the received signal using the decoding result of the decoding section, and the decoding section performs space-time error correction decoding each time a direct wave component is acquired.

According to another embodiment of the present invention, a receiving method comprises a first acquisition step of acquiring a direct wave component from a received signal subjected to space-time error correction coding, a first decoding step of performing space-time error correction decoding of a direct wave component acquired in the first acquisition step, a second acquisition step of acquiring again a direct wave component of the received signal using the decoding result of the first decoding step, and a second decoding step of performing space-time error correction decoding of the direct wave component acquired in the second acquisition step.

### Brief Description of Drawings

FIG.1 is a block diagram showing the essential configuration of a receiving apparatus according to Embodiment 1 of the present invention;
FIG.2 is a flowchart for explaining the operation of a receiving apparatus according to Embodiment 1;
FIG.3 is a block diagram showing the essential configuration of a receiving apparatus according to Embodiment 2 of the present invention;
FIG.4 is a flowchart for explaining the operation of a receiving apparatus according to Embodiment 2;
FIG.5 is a block diagram showing the essential configuration of a receiving apparatus according to Embodiment 3 of the present invention;
FIG.6 is a flowchart for explaining the operation of a receiving apparatus according to Embodiment 3;
FIG.7 is a drawing for explaining an actual example of the operation of a receiving apparatus according to Embodiment 3; and
FIG.8 is a block diagram showing the essential configuration of a transmitting apparatus and receiving apparatus according to Embodiment 4 of the present invention.

### Best Mode for Carrying out the Invention

With reference now to the accompanying drawings, embodiments of the present invention will be explained in detail below.

### (Embodiment 1)

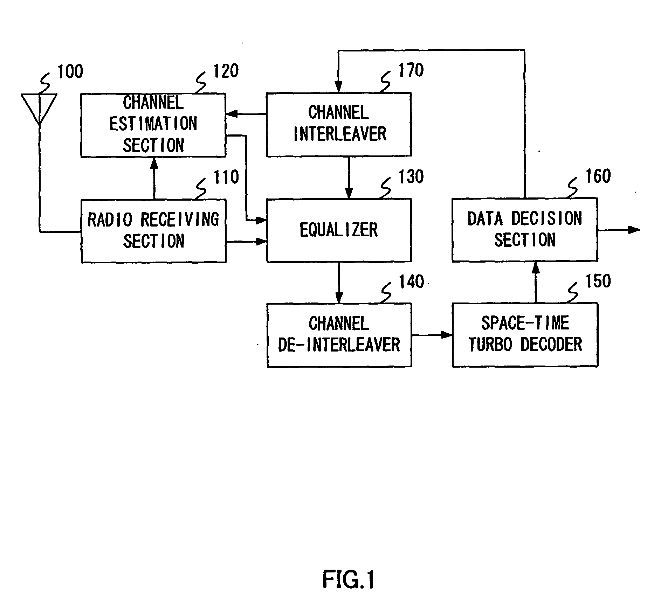

FIG.1 is a block diagram showing the essential configuration of a receiving apparatus according to Embodiment 1 of the present invention. The receiving apparatus shown in FIG.1 simultaneously receives a plurality of signal sequences transmitted using STC. That is to say, it is assumed, for example, that transmit data is turbo coded at the transmission source, thereby becoming a plurality of signal sequences, the signal sequences are interleaved, each signal sequence is transmitted from a corresponding transmitting antenna, and these signal sequences are superimposed and received by the receiving apparatus. In the following description, decoding for a signal space-time turbo coded as described above is termed space-time turbo decoding.

In FIG.1, a radio receiving section 110 performs predetermined radio processing (such as A/D conversion and down-conversion, for example) on a signal received via an antenna 100. A channel estimation section 120 performs channel estimation for the propagation path of the received signal. An equalizer 130 generates a replica of the received signal and performs equalization, and eliminates a delayed wave component from the received signal. A channel de-interleaver 140 de-interleaves the direct wave component of the received signal obtained by equalizer 130. A space-time turbo decoder 150 performs space-time turbo decoding of the received signal. A data decision section 160 makes a hard decision regarding the soft output likelihood from space-time turbo decoder 150, and obtains a space-time turbo decoding result. A channel interleaver 170 interleaves the space-time turbo decoding result, and outputs the interleaved result to the channel estimation section 120 and equalizer 130.

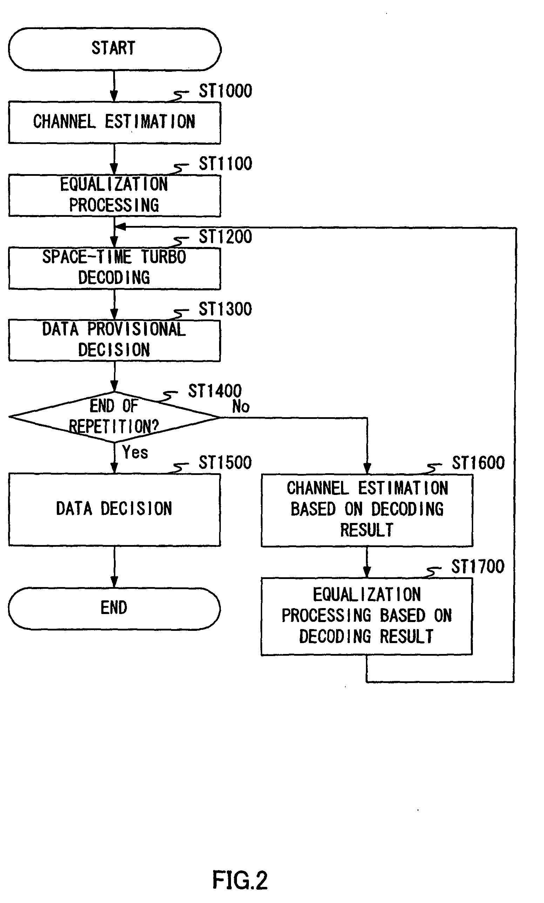

Next, the operation of a receiving apparatus configured as above will be described using the flowchart shown in FIG.2.

Channel characteristics are estimated by channel estimation section 120, using only a pilot symbol, from a received signal that has been subjected to predetermined radio processing (such as A/D conversion and down-conversion, for example) by radio receiving section 110 (ST1000). Then, based on the channel estimation result, equalization processing is performed by having a replica of the received signal generated by equalizer 130 and a delayed wave component eliminated from the received signal (ST1100), and a direct wave component is obtained. Next, the obtained direct wave component is de-interleaved by channel de-interleaver 140 so that the sequence of the data interleaved at the transmission source is restored to its original form, and is space-time turbo decoded by space-time turbo decoder 150 (ST1200). The soft decision value obtained by space-time turbo decoding undergoes hard decision processing by data decision section 160, and a space-time turbo decoding result (provisional decision result) is obtained (ST1300).

When a space-time turbo decoding result (provisional decision result) is obtained, whether or not repetition of processing is to be terminated is determined by an error check by means of redundancy bits, etc., (ST1400), and if repetition of processing is to be terminated, the obtained space-time turbo decoding result becomes a formal data decision result (ST1500), and processing ends. On the other hand, if repetition of processing is not to be terminated, the space-time turbo decoding result is output to channel interleaver 170, and the same interleaving is executed on the space-time turbo decoding result by channel interleaver 170 as the interleaving at the transmission source. The interleaved space-time turbo decoding result is then output to channel estimation section 120 and equalizer 130, and channel estimation, including data symbols, is performed again based on the space-time turbo decoding result (ST1600). As the space-time turbo decoding result is used in channel estimation at this time, the accuracy of channel estimation is higher than when only pilot symbols contained in the received signal are used. A replica of the received signal is then generated by equalizer 130 based on the newly obtained channel estimation result, and a direct wave component is obtained by performing equalization processing using the received signal, received signal replica, obtained channel estimation result, and space-time turbo decoding result (ST1700). As a more accurate channel estimation result and received signal decoding result are used here than in the previous equalization processing, the direct wave component obtained here is closer to the signal transmitted from the transmission source. Thereafter, a more accurate decoding result is obtained by performing space-time turbo decoding on the re-obtained direct wave component, and repeating equalization and space-time turbo decoding processing.

Thus, according to a receiving apparatus of this embodiment, channel estimation and equalization processing are performed repeatedly using a decoding result of error correction decoding by means of space-time turbo decoding, thereby enabling good decoding characteristics to be obtained in a multipath environment or multi-user environment.

### (Embodiment 2)

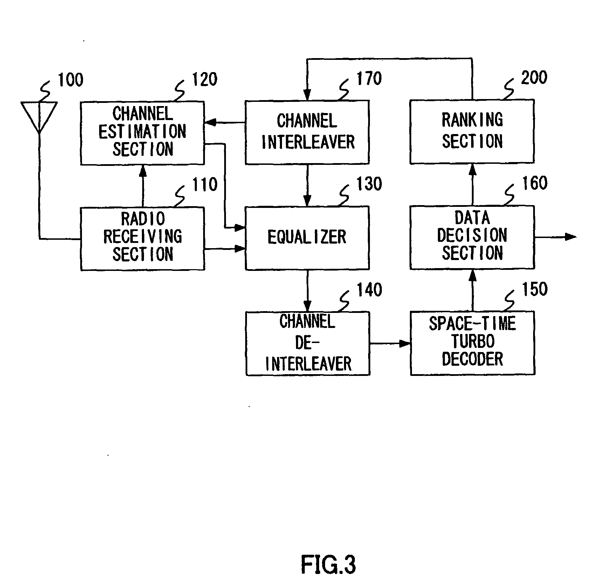

FIG.3 is a block diagram showing the essential configuration of a receiving apparatus according to Embodiment 2 of the present invention. Parts in FIG.3 identical to those of the receiving apparatus shown in FIG.1 are assigned the same codes as in FIG.1 and descriptions thereof are omitted. As in Embodiment 1, the receiving apparatus shown in FIG.3 simultaneously receives a plurality of signal sequences transmitted using STC. That is to say, it is assumed, for example, that transmit data is turbo coded at the transmission source, thereby becoming a plurality of signal sequences, the signal sequences are interleaved, each signal sequenceistransmittedfrom a corresponding transmitting antenna, and a reception signal in which these signal sequences are superimposed is received.

A feature of this embodiment is that, with regard to a space-time turbo decoding result (provisional decision result) from data decision section 160, the reliability of the decoding result of each symbol is ranked, and only higher ranked symbols are used repeatedly in channel estimation and equalization processing.

In FIG. 3, a ranking section 200 ranks the reliability of the decoding result for each symbol included in the space-time turbo decoding result (provisional decision result). Here, ranking section 200 performs ranking using the symbol likelihood or power value of each symbol, for example, as a criterion for deciding decoding result reliability. In the second and subsequent repetitions of space-time turbo decoding, channel estimation section 120 performs channel estimation using higher ranked symbols and pilot symbols contained in the received signal from among decoding results interleaved by channel interleaver 170. In the second and subsequent repetitions of space-time turbo decoding, equalizer 130 performs equalization processing using the received signal, channel estimation result, and higher ranked symbols.

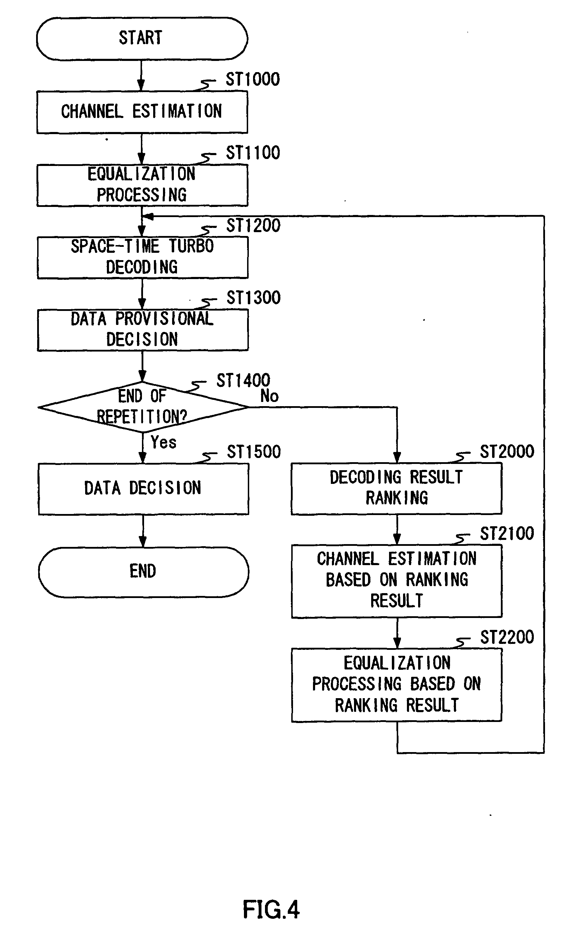

Next, the operation of a receiving apparatus configured as above will be described using the flowchart shown in FIG.4. In the flowchart shown in FIG.4, parts identical to those in the flowchart shown in FIG.2 are assigned the same numbers as in FIG.2 and descriptions thereof are omitted.

In this embodiment, as in Embodiment 1, channel characteristics are estimated from a received signal that has undergone predetermined radio processing, and equalization processing is performed. Then, a direct wave component obtained by performing equalization processing is de-interleaved and subjected to space-time turbo decoding, and a space-time turbo decoding result (provisional decision result) is obtained.

When a space-time turbo decoding result (provisional decision result) is obtained, whether or not repetition of processing is to be terminated is determined by an error check by means of redundancy bits, etc. , and if repetition of processing is to be terminated, the obtained space-time turbo decoding result becomes a formal data decision result, and processing ends. On the other hand, if repetition of processing is not to be terminated, the correctness of decoding of each symbol included in the space-time turbo decoding results is ranked by ranking section 200 (ST2000). Then, the same interleaving is executed on the ranked space-time turbo decoding results by channel interleaver 170 as the interleaving at the transmission source. The interleaved space-time turbo decoding results are then output to channel estimation section 120 and equalizer 130, and channel estimation is performed again using symbols ranked high by ranking section 200 and pilot symbols contained in the received signal (ST2100). As only higher ranked symbols among the space-time turbo decoding results - that is, symbols for which decoding has been performed more correctly - are used in channel estimation at this time, and symbols for which decoding has not been performed very correctly are not used in channel estimation, the accuracy of channel estimation is higher than in Embodiment 1. A replica of the received signal is then generated by equalizer 130 based on the newly obtained channel estimation result, and a direct wave component is obtained by performing equalization processing using the received signal, received signal replica, obtained channel estimation result, and higher ranked symbols (ST2200). As a more accurate channel estimation result and received signal decoding result are used here than in the previous equalization processing, and, in contrast to Embodiment 1, only symbols whose decoding correctness has been ranked high are used from among the space-time turbo decoding results, the direct wave component obtained here is closer to the signal transmitted from the transmission source. Thereafter, a more accurate decoding result is obtained by performing space-time turbo decoding on the re-obtained direct wave component, and repeating equalization and space-time turbo decoding processing.

Thus, according to a receiving apparatus of this embodiment, channel estimation and equalization processing are performed repeatedly using only symbols whose decoding correctness has been ranked high from among decoding results of error correction decoding by means of space-time turbo decoding, thereby enabling good decoding characteristics to be obtained in a multipath environment or multi-user environment.

### (Embodiment 3)

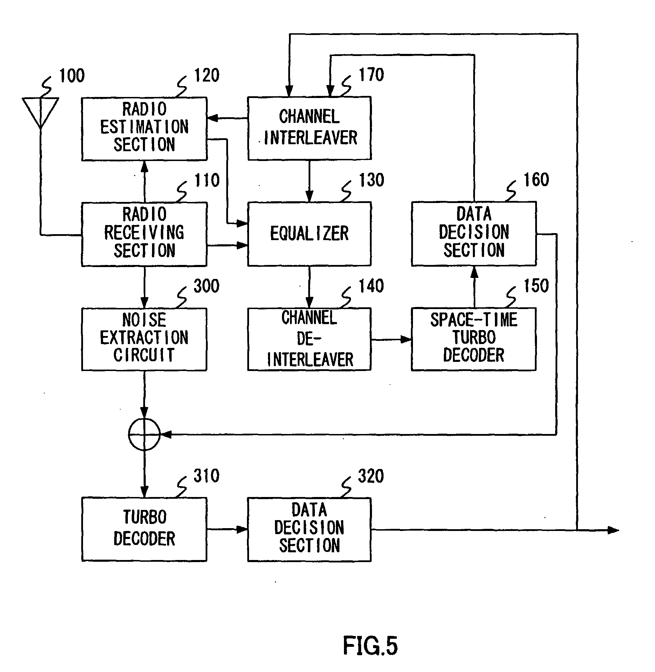

FIG.5 is a block diagram showing the essential configuration of a receiving apparatus according to Embodiment 3 of the present invention. Parts in FIG.5 identical to those of the receiving apparatus shown in FIG.1 are assigned the same codes as in FIG.1 and descriptions thereof are omitted. As in Embodiment 1, the receiving apparatus shown in FIG.5 simultaneously receives a plurality of signal sequences transmitted using STC. That is to say, it is assumed, for example, that transmit data is turbo coded at the transmission source, thereby becoming a plurality of signal sequences, the signal sequences are interleaved, each signal sequence is transmitted from a corresponding transmitting antenna, and these signal sequences are superimposed and received by the receiving apparatus.

A feature of this embodiment is that space-time turbo decoding results are separated into the same kind of sequences as the transmit data at the transmission source, a noise component extracted from the received signal is added to the coded symbols of each separated sequence, and then the respective signal sequences are turbo decoded.

In FIG.5, a noise extraction circuit 300 extracts a noise component from the difference between the reception signal received by radio receiving section 110 and a replica generated from the data decoding result. A turbo decoder 310 performs turbo decoding on a signal in which noise has been added to each coded symbol separated in accordance with a provisional decision by data decision section 160. A data decision section 320 makes a hard decision on the turbo decoded data, and obtains a turbo decoding result.

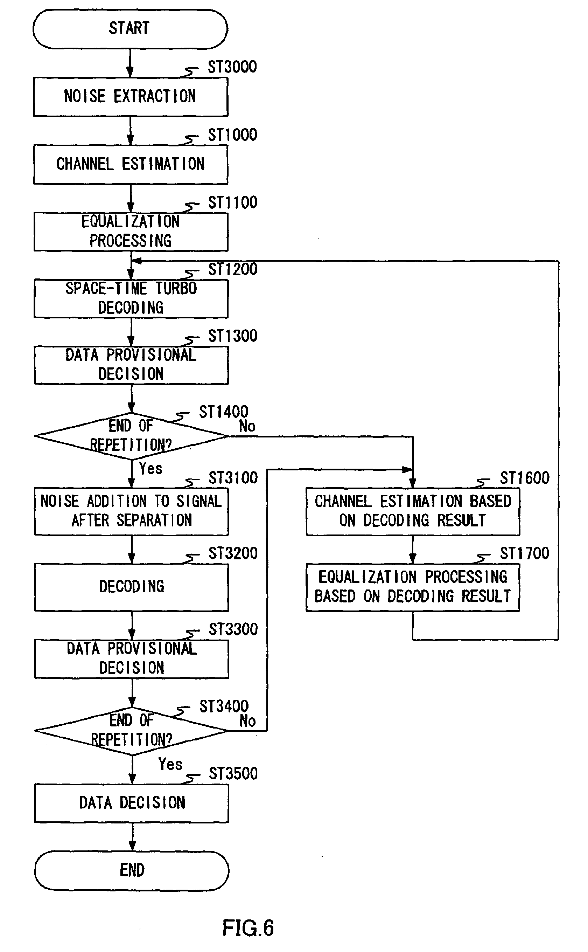

Next, the operation of a receiving apparatus configured as above will be described using the flowchart shown in FIG.6. In the flowchart shown in FIG.6, parts identical to those in the flowchart shown in FIG.2 are assigned the same numbers as in FIG.2 and descriptions thereof are omitted.

First, as in Embodiment 1, channel characteristics are estimated from a received signal that has undergone predetermined radio processing, and equalization processing is performed. Then, a direct wave component obtained by performing equalization processing is de-interleaved and subjected to space-time turbo decoding, and a space-time turbo decoding result (provisional decision result) is obtained.

When a space-time turbo decoding result (provisional decision result) is obtained, it is determined whether or not repetition of space-time turbo decoding processing is to be terminated, and if repetition of space-time turbo decoding processing is not to be terminated, the space-time turbo decoding result is output to channel interleaver 170, the same interleaving is executed on the space-time turbo decoding result by channel interleaver 170 as the interleaving at the transmission source, and channel estimation, equalization processing, and space-time turbo decoding are repeated in the same way as in Embodiment 1.

When a stipulated number of repetitions is reached and space-time turbo decoding processing ends, error checking is performed by means of redundancybits (ST3000), and if an error is not detected, a final data decision is made (ST3600) , and decoding processing is terminated. If an error is detected, in noise extraction circuit 300 a composite received signal replica is created from the space-time turbo decoding provisional decision result and channel characteristics, and extraction of a noise component is performed from the difference between the replica and the received signal (ST3100). The noise extracted by noise extraction circuit 300 is then added to coded symbols separated into a plurality of sequences in the same way as for the transmit data by means of space-time turbo decoding processing (ST3200). Then coded symbols of each sequence to which noise has been added are turbo decoded by turbo decoder 310 (ST3300), and a turbo decoding result (provisional decision result) is obtained (ST3400). By further performing turbo decoding on coded symbols that have undergone space-time turbo decoding in this way, it is possible to correct residual errors that could not be corrected in repetition of space-time turbo decoding. Also, by adding noise to coded symbols after space-time turbo decoding, it becomes possible to assume that the likelihood distribution during decoding is a Gaussian distribution, without protrusion of only unwanted components due to residual errors. This enables the decoding performance of turbo decoding to be exploited.

Then, when a turbo decoding result (provisional decision result) is obtained, whether or not repetition of decoding processing is to be terminated is determined by an error check by means of redundancy bits, etc. (ST3500), and if repetition of decoding processing is to be terminated, the obtained turbo decoding result is subjected to a hard decision by data decision section 320 (ST3600) and becomes a formal data decision result, and processing ends. On the other hand, if repetition of decoding processing is not to be terminated, the turbo decoding result is output to channel interleaver 170, the same interleaving is executed on the turbo decoding result by channel interleaver 170 as the interleaving at the transmission source, and in the same way as in Embodiment 1, channel estimation and equalization processing are performed, and space-time turbo decoding is performed again.

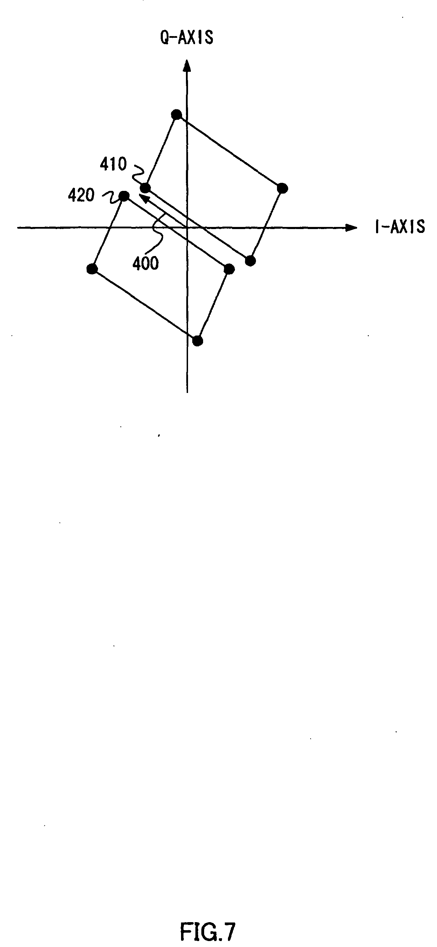

FIG.7 is a drawing showing an example of received signal point candidate arrangement in the IQ plane in the case of BPSK transmission from three transmitting antennas. In FIG.7, a black dot indicates a received signal point candidate, and a vector indicates a received signal. As shown in FIG.7, since received signal point candidates 410 and 420 are close, when received symbols with phase and amplitude such as those of received signal 400, for example, undergo space-time turbo decoding, there may be residual errors even if space-time turbo decoding is repeated as described above.

Thus, in this embodiment, decoding accuracy is improved by performing turbo decoding on sequences of coded symbols that have been space-time turbo decoded and divided into a plurality of sequences.

Thus, according to a receiving apparatus of this embodiment, a signal that has undergone space-time turbo decoding is separated into the same kind of sequences as the transmit data at the transmission source, a noise component is added to the coded symbols of each separated sequence, and then turbo decoding is performed anew for the coded symbols of each sequence, thereby enabling errors remaining even after space-time turbo decoding to be corrected, and still better decoding characteristics to be obtained in a multipath environment or multi-user environment.

### (Embodiment 4)

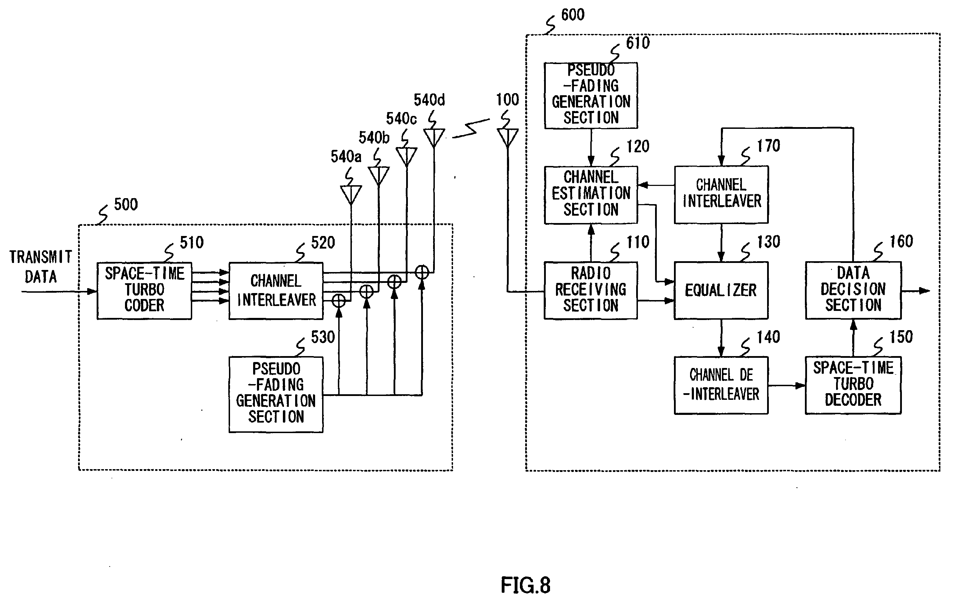

FIG.8 is a block diagram showing the essential configuration of a transmitting apparatus 500 and receiving apparatus 600 according to Embodiment 4 of the present invention. Parts in receiving apparatus 600 shown in FIG.8 identical to those of the receiving apparatus shown in FIG.1 are assigned the same codes as in FIG.1 and descriptions thereof are omitted.

A feature of this embodiment is that different known signal phase and amplitude fluctuation patterns are superimposed at the time of signal transmission for each of a plurality of transmitting antennas in the transmitting apparatus, and the receiving apparatus performs channel estimation using the same signal phase and amplitude fluctuation patterns as added in the transmitting apparatus, and actual propagation path characteristics. In the following description, a known signal phase and amplitude fluctuation pattern is referred to as "pseudo-fading."

In FIG.8, transmitting apparatus 500 comprises a space-time turbo coder 510, a channel interleaver 520, a pseudo-fading generation section 530, and transmitting antennas 540a through 540d. Space-time turbo coder 510 turbo codes transmit data by performing space-time turbo coding, and also generates a plurality of signal sequences (here, four sequences). Channel interleaver 520 interleaves the plurality of (four) signal sequences. Pseudo-fading generation section 530 generates pseudo-fading to be added to the plurality of (four) signal sequences. Transmitting antennas 540a through 540d transmit the plurality of (four) signal sequences to which pseudo-fading has been added.

In receiving apparatus 600, a pseudo-fading generation section 610 generates the same pseudo-fading as generated by pseudo-fading generation section 530.

Next, the operation of transmitting apparatus 500 and receiving apparatus 600 configured as above will be described.

Transmit data undergoes space-time turbo coding by space-time turbo coder 510, and a plurality of (four) signal sequences are generated. The plurality of (four) signal sequences are then interleaved on a sequence-by-sequence basis by channel interleaver 520.

Meanwhile, pseudo-fading to be added to the plurality of (four) signal sequences is generated by pseudo-fading generation section 530. Here, time fluctuations of the generated pseudo-fading are assumed to be comparatively fast. The pseudo-fading is then added to the plurality of (four) signal sequences output from channel interleaver 520, and the signal sequences are transmitted virtually simultaneously from respective corresponding transmitting antennas 540a through 540d.

The plurality of (four) signal sequences are then received by antenna 100, and, as in Embodiment 1, channel characteristics are estimated from a received signal on which predetermined radio processing has been performed. At this time, the same pseudo-fading is generated by pseudo-fading generation section 610 as was generated by pseudo-fading generation section 530, and channel estimation section 120 performs channel estimation using the generated pseudo-fading and actual propagation path characteristics.

Thereafter, equalization processing, de-interleaving, and space-time turbo decoding are performed repeatedly, and highly accurate decoding results are obtained.

When the received signal point candidate arrangement shown in FIG.7 occurs, for example, the time over which received signal point candidates 410 and 420 approach is longer in a low-speed fading environment in which fading fluctuations are slow. If a signal with amplitude and phase such as those of received signal 400 is received at this time, it is highly probable that it will not be possible for appropriate decoding to be performed by space-time turbo decoder 150, with a resultant degradation of decoding characteristics. With this embodiment, on the other hand, this kind of received signal point arrangement can be resolved in a short time by means of pseudo-fading.

As pseudo-fading with fast time fluctuations is added in transmitting apparatus 500 to a reception signal received by receiving apparatus 600 according to this embodiment, the actual propagation path fading correlation can be resolved, and as the pseudo-fading is also known to receiving apparatus 600, decoding degradation can be prevented without degrading channel estimation accuracy.

Thus, according to a transmitting apparatus and receiving apparatus of this embodiment, pseudo-fading with fast fluctuations is added to each of a plurality of signal sequences, and the receiving apparatus generates the same pseudo-fading and also performs channel estimation using the generated pseudo-fading and actual propagation path characteristics, thereby enabling good decoding characteristics to be obtained even in a low-speed fading environment.

In this embodiment, it is also possible for the transmitting apparatus not always to add pseudo-fading to each of a plurality of signal sequences. To be specific, by having the transmitting apparatus add pseudo-fading only at the time of data signal transmission and not at the time of pilot signal transmission, fading correlation at the time of low-speed fading can be decreased; and by having the receiving apparatus receive a pilot signal and estimate actual propagation path channel characteristics, and, at the time of data signal reception, perform channel estimation using the actual propagation path channel estimation result and known pseudo-fading, degradation of channel estimation accuracy can be prevented.

As described above, according to the present invention, good decoding characteristics can be obtained in a multipath environment or multi-user environment.

This application is based on Japanese Patent Application No.2002-047545 filed on February 25, 2002, entire contents of which are expressly incorporated by reference herein.

### Industrial Applicability

The present invention is applicable to a receiving apparatus and receiving method.

## Claims

1. A receiving apparatus comprising:
an acquisition section that acquires a direct wave component from a received signal that has undergone space-time error correction coding; and
a decoding section that performs space-time error correction decoding of an acquired direct wave component;
wherein:
said acquisition section acquires a direct wave component of said received signal using a decoding result of said decoding section; and
said decoding section performs space-time error correction decoding each time a direct wave component is acquired.

2. The receiving apparatus according to claim 1, wherein said acquisition section comprises:
a channel estimation section that performs channel estimation for a propagation path of said received signal using a decoding result of said decoding section; and
an equalizing section that equalizes said received signal using a channel estimation result of said channel estimation section and a decoding result of said decoding section, and acquires a direct wave component.

3. The receiving apparatus according to claim 2, wherein, when said received signal is a signal in which a plurality of different coded symbols are superimposed, and each coded symbol is transmitted from a respective corresponding antenna using an identical time and identical frequency, and is received by a paired receiving antenna:
said channel estimation section performs channel estimation for propagation paths corresponding to each said pair of transmitting antenna and receiving antenna; and
said equalizing section equalizes said coded symbols corresponding to each said pair of transmitting antenna and receiving antenna.

4. The receiving apparatus according to claim 1, further comprising a ranking section that ranks reliability of decoding of each data unit for a predetermined data unit contained in a decoding result of said decoding section;
wherein said acquisition section acquires a direct wave component of said received signal using a data unit ranked high by said ranking section.

5. The receiving apparatus according to claim 1, wherein, when said received signal is a signal in which a plurality of different coded symbols are superimposed, and each coded symbol is transmitted from a respective corresponding antenna using an identical time and identical frequency, and is received by'a paired receiving antenna, said decoding section includes a separating section that separates a decoding result for each said coded symbol, and further performs error correction decoding for a decoding result after separation.

6. The receiving apparatus according to claim 5, wherein said decoding section includes an extracting section that extracts a noise component from said received signal, and further performs error correction decoding after an extracted noise component has been added to a decoding result after separation.

7. The receiving apparatus according to claim 3, further comprising a generating section that generates a known fluctuation pattern with regard to signal phase and amplitude superimposed for each said coded symbol;
wherein said channel estimation section performs channel estimation using said known fluctuation pattern and actual propagation path characteristics.

8. A receiving method comprising:
a first acquisition step of acquiring a direct wave component from a received signal that has undergone space-time error correction coding;
a first decoding step of performing space-time error correction decoding of a direct wave component acquired in said first acquisition step;
a second acquisition step of again acquiring a direct wave component of said received signal using a decoding result of said first decoding step; and
a second decoding step of performing space-time error correction decoding of a direct wave component acquired in said second acquisition step.
